# EUROPÄISCHE PATENTSCHRIFT

(11) **EP 3 568 313 B1**
(45) Veröffentlichungstag und Bekanntmachung des Hinweises auf die Patenterteilung: **09.03.2022**
(21) Anmeldenummer: 18702102.7
(22) Anmeldetag: 11.01.2018
(51) Int. Cl.: B60L 5/42, B60L 53/30, B60L 5/36

(54) **KONTAKTEINHEIT FÜR EINE LADESTATION UND VERFAHREN ZUR KONTAKTIERUNG**
CONTACT UNIT FOR A CHARGING STATION, AND METHOD FOR MAKING CONTACT
ENSEMBLE DE CONTACTS POUR STATION DE CHARGE ET PROCÉDÉ DE MISE EN CONTACT

(30) Priorität: 16.01.2017 DE 102017200593
(43) Veröffentlichungstag der Anmeldung: 20.11.2019
(73) Patentinhaber: Schunk Transit Systems GmbH, 5151 Nussdorf am Haunsberg (AT)
(72) Erfinder: FELDINGER, Martin, 5201 Seekirchen am Wallersee (AT)
(74) Vertreter: advotec.
(86) Internationale Anmeldenummer: PCT/EP2018/050676
(87) Internationale Veröffentlichungsnummer: WO 2018/130618

(56) Entgegenhaltungen:
- EP-A1- 3 031 658
- CN-A- 101 580 024
- DE-A1-102013 201 491
- DE-A1-102013 202 671
- DE-A1-102014 213 831

## Beschreibung

Die Erfindung betrifft eine Kontakteinheit für eine Ladestation eines elektrisch angetriebenen Fahrzeugs sowie ein Verfahren zur Ausbildung einer elektrisch leitenden Verbindung zwischen dem Fahrzeug, insbesondere Elektrobus oder dergleichen, und der Ladestation, wobei die Kontakteinheit oberhalb eines Fahrzeugs anordbar ausgebildet ist, wobei mittels der Kontakteinheit elektrische Ladekontakte der Kontakteinheit relativ zu Kontaktflächen des Fahrzeugs bewegbar und mit diesen kontaktierbar sind, wobei die Kontakteinheit zumindest zwei Ladekontaktträger mit jeweils zumindest zwei daran angeordneten Ladekontakten aufweist, wobei die Ladekontaktträger über ein Parallelgestänge der Kontakteinheit mit zwei parallel angeordneten Verbindungsstangen und mit zwei parallel angeordneten Trägerstangen miteinander verbunden sind, wobei die Trägerstangen jeweils in einer von zwei parallelen Bewegungsebenen über voneinander beabstandete Verbindungsgelenke mit den Verbindungsstangen verbunden sind und mit den Verbindungsstangen ein Parallelogramm ausbilden.

Derartige Kontakteinheiten und Verfahren sind aus dem Stand der Technik bekannt und werden regelmäßig bei elektrisch angetriebenen Fahrzeugen eingesetzt, die zwischen Haltestellen verkehren. Dies können Elektrobusse, aber auch prinzipiell andere Fahrzeuge, wie beispielsweise ein Zug oder eine Straßenbahn, sein, die nicht permanent elektrisch mit einem Fahrdraht oder Ähnlichem verbunden sind. Bei diesen Fahrzeugen erfolgt eine Aufladung eines elektrischen Energiespeichers bei einer Fahrtunterbrechung an einer Haltestelle durch eine Ladestation. Das Fahrzeug wird an der Haltestelle mit der Ladestation elektrisch verbunden, wobei der Energiespeicher zumindest soweit aufgeladen wird, dass das Fahrzeug die nächste anzufahrende Haltestelle mit einer Ladestation erreichen kann. Zur Herstellung einer elektrischen Verbindung zwischen Fahrzeug und Ladestation wird eine Kontakteinheit eingesetzt, die oberhalb des Fahrzeugs an der betreffenden Haltestelle montiert bzw. positioniert ist. Ein Ladekontakt der Ladestation wird dann in Richtung einer Kontaktfläche auf einem Dach des Fahrzeugs bewegt und eine elektrische Verbindung hergestellt. Beispielsweise kann eine Kontakteinheit über zumindest vier Ladekontakte verfügen, wobei dann regelmäßig zwei Ladekontakte zur Energieübertragung, ein Ladekontakt als Erdungsleiter, und ein weiterer Ladekontakt zur Datenübertragung dienen kann. Bei dieser Art der Fahrzeugkontaktierung müssen alle Ladestationen entlang einer Fahrtstrecke mit einer entsprechenden Kontakteinheit ausgestattet sein, weshalb die Kontakteinheit besonders kostengünstig, zuverlässig und gleichzeitig wartungsarm sein sollte.

Wesentlich bei einer Zusammenführung von Ladekontakten mit den jeweiligen Kontaktflächen des Fahrzeugs ist, dass der Ladekontakt mit einer definierten Kontaktkraft auf die Kontaktfläche gedrückt wird, um eine sichere elektrische Verbindung ausbilden zu können. Beispielsweise ist aus der DE 10 2013 201 491 A1 eine Kontakteinheit zur Anordnung oberhalb eines Fahrzeugs bekannt, wobei die Kontakteinheit zwei Parallelgestänge mit jeweils zwei Ladekontakten umfasst. Ein Verstellantrieb betätigt ein Parallelgestänge, so dass die Ladekontakte relativ zu einer Kontaktfläche auf einem Dach des Fahrzeugs bewegt werden können.

Bei den bekannten Kontakteinheiten ist stets nachteilig, dass diese für eine definierte Kontakthöhe, das heißt einen Abstand von der Kontakteinheit in einer Einfahrposition zur Verwahrung der Ladekontakte relativ zu einer Kontaktposition zur Stromübertragung auf das Fahrzeug ausgebildet bzw. angeordnet sein müssen. Das heißt, ein Relativabstand von möglichen Kontaktpositionen und der Einfahrposition ist nur in engen Grenzen nutzbar und muss regelmäßig eingestellt oder durch konstruktive Änderungen angepasst werden, da sonst nicht die notwendige bzw. gewünschte Kontaktkraft auf die Kontaktfläche aufgebracht werden kann. Weiter ist es von Bedeutung, dass ein Fahrzeug unterschiedlich beladen und somit relativ zu der Kontakteinheit bzw. den Ladekontakten geneigt sein kann. Darüber hinaus können insbesondere Busse im Bereich einer Haltestelle abgesenkt werden, um einen Zugang für beispielsweise Personen mit einer körperlichen Beeinträchtigung zu erleichtern. Diese gegebenenfalls einseitige Absenkung des Busses bewirkt eine Höhenänderung bzw. Neigung einer Kontaktfläche relativ zur Fahrbahn, wenn das Absenken nur auf einer Seite des Busses erfolgt. Weiter kann ein Untergrund der Haltestelle bzw. eine Fahrbahn relativ zur Kontakteinheit geneigt sein. Ein Fahrzeug kann daher an der Haltestelle unterhalb der Kontakteinheit um seine Längsachse und/oder seine Querachse gekippt bzw. geneigt sein. Folglich sind dann die Kontaktflächen auf einem Dach des Fahrzeugs mit dessen Kippbewegung relativ zu den Ladekontakten in horizontaler und vertikaler Richtung geneigt.

Zwar ist es gegebenenfalls möglich, eine elektrische Verbindung zwischen den jeweiligen Ladekontakten und den Kontaktflächen herzustellen, wenn auch die Kontakteinheit neigbar ist, jedoch verteilt sich eine von der Kontakteinheit über die Ladekontakte auf die Kontaktflächen ausgeübte Kontaktkraft dann höchst unterschiedlich. Daher ist es kaum möglich, die für eine sichere elektrische Verbindung gewünschte Kontaktkraft der Ladekontakte an den Kontaktflächen des Fahrzeugs in allen beschriebenen Fällen einer Neigung des Fahrzeugs auszubilden. So besteht unter anderem auch die Gefahr eines Abhebens eines Ladekontakts von einer Kontaktfläche während eines Ladevorgangs, die Ausbildung eines unterwünscht hohen Widerstands zwischen Ladekontakt und Kontaktfläche sowie die Ausbildung eines Lichtbogens zwischen Ladekontakt und Kontaktfläche.

Die DE 10 2014 213831 A1 betrifft eine Kontakteinheit zur Stromübertragung für elektrische betriebene Fahrzeuge in Zusammenhang mit einer stationären Ladestation. Die Ladekontakte dieser Kontakteinheit bestehen aus vier länglichen Kontakten, welche quer und zusätzlich auch längs zur Fahrtrichtung des Fahrzeugs angeordnet angebracht sind. Die Kontakte der Kontakteinheit sind zudem vertikal bewegbar.

Die EP 3 031 658 A1 beschreibt ein Ladeverfahren für elektrisch angetriebene Fahrzeuge, durchgeführt mit einer an eine Ladestation angebrachten Kontakteinheit. Die Kontakteinheit umfasst dabei zwei parallel angeordnete, längsseitig zur Fahrtrichtung des Fahrzeugs verlaufende Kontaktschienen mit jeweils einem Ladekontakt und weist eine Vorrichtung zur Höhenverstellung auf, welche in der Art einer Schwinge am distalen Ende eines Mastes der Ladestation angeordnet ist.

Die CN 101 580 024 A und die DE 10 2013 202671 A1 betreffen weitere Kontakteinheiten der eingangs genannten Art.

Es ist daher Aufgabe der Erfindung, eine Kontakteinheit und ein Verfahren zur Ausbildung einer elektrisch leitenden Verbindung zwischen einem Fahrzeug und einer Ladestation vorzuschlagen, die bzw. das eine sichere Kontaktierung des Fahrzeugs ermöglicht.

Diese Aufgabe wird durch eine Kontakteinheit mit den Merkmalen des Anspruchs 1, eine Ladestation mit den Merkmalen des Anspruchs 11 und ein Verfahren mit den Merkmalen des Anspruchs 12 gelöst.

Die erfindungsgemäße Kontakteinheit für eine Ladestation eines elektrisch angetriebenen Fahrzeugs, insbesondere Elektrobus oder dergleichen, ist oberhalb eines Fahrzeugs anordbar ausgebildet, wobei mittels der Kontakteinheit elektrische Ladekontakte der Kontakteinheit relativ zu Kontaktflächen des Fahrzeugs bewegbar und mit diesen kontaktierbar sind, wobei die Kontakteinheit zumindest zwei Ladekontaktträger mit jeweils zumindest zwei daran angeordneten Ladekontakten aufweist, wobei die Ladekontaktträger über ein Parallelgestänge der Kontakteinheit mit zwei parallel angeordneten Verbindungsstangen und mit zwei parallel angeordneten Trägerstangen miteinander verbunden sind, wobei die Trägerstangen jeweils in einer von zwei parallelen Bewegungsebenen über voneinander beabstandete Verbindungsgelenke mit den Verbindungsstangen verbunden sind und mit den Verbindungsstangen ein Parallelogramm ausbilden, wobei die Verbindungsstangen in einer parallel und zentrisch zu den Bewegungsebenen verlaufenden Trägerebene über zwei voneinander beabstandete Trägergelenke mit einem Basisträger der Kontakteinheit verbunden sind, wobei die Ladekontaktträger jeweils über ein Drehgelenk mit der Trägerstange verbunden sind, wobei die Drehgelenke relativ zu den Verbindungsgelenken orthogonal angeordnet sind, wobei die Ladekontaktträger jeweils die Ladekontakte relativ zu der Drehachse koaxial haltern.

Die Kontakteinheit ist demnach Bestandteil einer stationären Ladestation für ein elektrisch angetriebenes Fahrzeug und dient dazu, die zumindest vier Ladekontakte der Ladestation auf jeweils eine Kontaktfläche des Fahrzeugs, die vorzugsweise auf einem Fahrzeugdach angeordnet ist, zu bewegen und mit dieser elektrisch zu kontaktieren. So ist es dann möglich, das Fahrzeug während einer Fahrtunterbrechung an einer Ladestation mit elektrischer Energie zu versorgen und diese im Fahrzeug zu speichern. Die Bewegung der Ladekontakte auf die Kontaktfläche hin und zurück wird durch die Kontakteinheit bzw. eine Gelenkarmvorrichtung der Kontakteinheit ausgeführt. Die Ladekontakte sind dazu an einem unteren Ende der Kontakteinheit angeordnet, wobei die Ladekontakte von einer oberen Einfahrposition zur Verwahrung der Ladekontakte bis zu einer unteren Kontaktposition zur Stromübertragung bzw. Kontaktierung der Kontaktflächen bewegt werden können. In der Kontaktposition wird dabei eine definierte und im Wesentlichen gleich große Kontaktkraft auf die jeweiligen Kontaktflächen von der Kontakteinheit ausgebildet.

Die Kontakteinheit verfügt über einen Basisträger, der über zwei Trägergelenke mit einem Parallelgestänge verbunden ist und dieses mittig haltert. Das Parallelgestänge ist aus vergleichsweise langen Verbindungsstangen und kurzen Trägerstangen, die vertikal angeordnet und über die Verbindungsgelenke mit den Verbindungsstangen verbunden sind, ausgebildet. Die Verbindungsstangen können so relativ zu einer Horizontalebene geneigt werden, wobei die Trägerstangen stets vertikal innerhalb der beiden parallelen Bewegungsebenen angeordnet sind. Da die Verbindungsgelenke koaxial zu den Trägergelenken angeordnet sind, ergibt sich stets eine gleichmäßige Kraftverteilung von einer auf den Basisträger zentral ausgeübten Kontaktkraft auf die beiden Trägerstangen unabhängig von einer Neigung der Verbindungsstangen.

Die Ladekontaktträger sind jeweils an den Trägerstangen über das Drehgelenk angeordnet. Da die Ladekontakte am jeweiligen Ladekontaktträger relativ zu dem Drehgelenk ebenfalls koaxial angeordnet sind, kann über die Trägerstangen bzw. das Drehgelenk die Kontaktkraft anteilig auf die jeweils beiden am Ladekontaktträger angeordneten Ladekontakte verteilt werden. Da die Drehgelenke relativ zu den Verbindungsgelenken orthogonal angeordnet sind, ist es möglich, die Ladekontakte an einer Quer- und Längsneigung eines Fahrzeugs in ihrer Höhe relativ zum Fahrzeug anzupassen und gleichzeitig eine sichere Kontaktierung der jeweiligen Kontaktflächen des Fahrzeugs mit jeweils einer gleich großen anteiligen Kontaktkraft mit einfachen Mitteln zu erzielen.

Demnach kann über den Basisträger eine gleichmäßig auf die Ladekontakte verteilte Kontaktkraft auf diese ausgeübt werden. Wenn vier Ladekontakte vorhanden sind, kann über den Basisträger die vierfache Kontaktkraft in das Parallelgestänge einleitet werden bzw. kann die über dem Basisträger in der Parallelgestänge eingeleitete Kontaktkraft zu jeweils vier gleich großen Teilen auf die Ladekontakte verteilt werden.

Die Ladekontakte können als Kontaktleisten ausgebildet sein, die jeweils an den Ladekontaktträgern relativ zueinander parallel angeordnet sein können, wobei die Ladekontaktträger relativ zueinander parallel angeordnet sein können. Insbesondere durch die parallele Anordnung kann stets sichergestellt werden, dass die Kontaktkraft gleichmäßig auf die Ladekontakte verteilt wird. Die Kontaktleisten können einfach mit ebenfalls leisten- oder schienenförmigen Kontaktflächen auf einem Dach eines Fahrzeugs kontaktiert werden. Vorzugsweise können die Kontaktleisten quer, insbesondere orthogonal relativ zu den Kontaktschienen verlaufen. Auch wenn ein Fahrzeug so an einer Ladestation hält, dass die Kontaktleisten außerhalb ihrer Mitte, bezogen auf deren Länge, mit schienenförmigen Kontaktflächen am Fahrzeug in Kontakt gelangen, kann die Kontaktkraft gleichmäßig verteilt werden.

So ist es vorteilhaft, wenn die Kontaktleisten quer zur Fahrtrichtung des Fahrzeugs anordbar sind. Kontaktflächen bzw. Kontaktschienen auf dem Dach des Fahrzeugs können dann in Fahrtrichtung des Fahrzeugs angeordnet sein. Alternativ können die Kontaktleisten in Fahrtrichtung des Fahrzeugs angeordnet, und die Kontaktflächen bzw. Kontaktschienen auf dem Dach des Fahrzeugs quer zur Fahrtrichtung des Fahrzeugs angeordnet sein.

Die Kontakteinheit kann weiter eine Gelenkarmvorrichtung und eine Antriebvorrichtung zum Antrieb der Gelenkarmvorrichtung aufweisen. Die Gelenkarmvorrichtung kann ein Pantograph oder eine Schwinge sein, die mit einem Verstellantrieb der Antriebvorrichtung betätigbar ist. Der Verstellantrieb kann ein pneumatischer, hydraulischer oder elektrischer Antrieb sein, der beispielsweise mit Federn einer Federeinrichtung der Antriebvorrichtung zusammenwirken kann. So ist es dann auch möglich, über die Antriebvorrichtung die Gelenkarmvorrichtung relativ zu den Kontaktflächen so zu positionieren, dass die gewünschte Kontaktkraft über die Antriebvorrichtung auf die Kontaktflächen ausgebildet wird. Insbesondere der Basisträger kann an einem unteren Ende der Gelenkarmvorrichtung angeordnet bzw. befestigt sein. Prinzipiell kann daher die Kontakteinheit jede beliebige Vorrichtung aufweisen, die eine Halterung und Relativbewegung des Basisträgers sowie eine Ausbildung einer Kontaktkraft zu den Kontaktflächen ermöglicht.

So kann der Basisträger über zumindest ein Haltegelenk mit einer Gelenkarmvorrichtung der Kontakteinheit verbunden sein. Das Haltegelenk kann ein Verschwenken des Basisträgers relativ zur Ladestation ermöglichen. Alternativ kann dann eine starre Verbindung zwischen der Gelenkarmvorrichtung und der Kontakteinheit vorgesehen sein.

Demnach kann der Basisträger vertikal angeordnet und starr mit der Gelenkarmvorrichtung verbunden sein. So kann sichergestellt werden, dass es nicht zu einem unerwünschten Verschwenken des Parallelgestänges relativ zu der Gelenkarmvorrichtung, beispielsweise durch Wind, kommen kann.

Die Kontakteinheit kann eine Ausrichteeinrichtung aufweisen, mittels der in einer Einfahrposition der Kontakteinheit zur Verwahrung der Ladekontakte die Ladekontakte von einer Kontaktlage in eine horizontale Verwahrlage ausgerichtet werden können. Wenn beispielsweise die Ladekontakte mit den Kontaktflächen bei einem relativ zur Ladestation geneigten Fahrzeugdach kontaktiert sind, ist es vorteilhaft, die Ladekontakte vor einer erneuten Kontaktierung eines gegebenenfalls anderen Fahrzeugs in eine im Wesentlichen horizontalen Lage zu bringen bzw. in einer gemeinsamen horizontalen Ebene zu positionieren.

Die Ausrichteeinrichtung kann als ein Anschlag für die Ladekontaktträger ausgebildet sein. So ist es dann möglich, die Ladekontaktträger gegen den bzw. die Anschläge in der Einfahrposition zu verfahren, wodurch dann die Ladekontaktträger und das Parallelgestänge wieder in eine Ausgangslage ausgerichtet werden können. Ein derartiger Anschlag bzw. Anschläge für die Ladekontaktträger sind besonders einfach an einer Ladestation konstruktiv ausbildbar.

Alternativ oder ergänzend kann die Kontakteinheit Federeinrichtungen aufweisen, mittels der jeweils die Ladekontaktträger an dem Parallelgestänge und/oder das Parallelgestänge an dem Basisträger ausrichtbar sein können. Die Federeinrichtungen können Blattfedern und/oder Spiralfedern sowie auch elastische Elemente aufweisen, mittels derer die Ladekontaktträger an dem Parallelgestänge bzw. das Parallelgestänge selbst an dem Basisträger bei einer Abweichung von einer Horizontallage mit einer Federkraft beaufschlagt werden können. So ist bereits vor Erreichen einer Einfahrposition und unmittelbar nach Verlassen einer Kontaktposition eine entsprechende Ausrichtung der Ladekontakte in einer gemeinsamen horizontalen Ebene möglich. Eine Federkraft darf dabei jedoch nicht so groß ausgebildet werden, dass die jeweilige Kontaktkraft des Ladekontakts von der Federkraft wesentlich beeinflusst wird.

Auch ist es vorteilhaft, wenn das Parallelgestänge und/oder die Ladekontaktträger an dem Parallelgestänge um bis zu +/- 5° relativ zu einer Horizontalebene neigbar ausgebildet ist bzw. sind. Dann ist es auch möglich, eine Neigung zu begrenzen.

In einer weiteren Ausführungsform der Erfindug bildet die erfindungsgemäße Kontakteinheit einen Bestandteil einer sationären Ladestation für elektrisch angetriebene Fahrzeuge, insbesondere Elektrobusse oder dergleichen.

Bei dem erfindungsgemäßen Verfahren zur Ausbildung einer elektrisch leitenden Verbindung zwischen einem Fahrzeug, insbesondere Elektrobus oder dergleichen, und einer Ladestation, werden mittels einer erfindungsgemäßen Kontakteinheit der Ladestation oberhalb eines Fahrzeugs elektrische Ladekontakte der Kontakteinheit relativ zu Kontaktflächen des Fahrzeugs bewegt und mit diesen kontaktiert, wobei die Kontakteinheit zumindest zwei zueinander parallel angeordnete Ladekontaktträger mit jeweils zumindest zwei daran zueinander parallel angeordneten Ladekontakten aufweist, wobei die Ladekontakte von einer Einfahrposition der Kontakteinheit zur Verwahrung der Ladekontakte in eine Kontaktposition der Kontakteinheit zur Ausbildung von jeweils elektrischen Kontaktpaarungen zwischen den Ladekontakten und den Kontaktflächen bewegt werden, wobei in der Kontaktposition über die Kontakteinheit jeweils eine gleich große Kontaktkraft der Ladekontakte auf die Kontaktflächen ausgeübt wird. Hinsichtlich der vorteilhaften Wirkungen des erfindungsgemäßen Verfahrens wird auf die Vorteilsbeschreibung der erfindungsgemäßen Vorrichtung verwiesen.

Bei dem Verfahren kann eine gleich große Kontaktkraft der Ladekontakte auf die Kontaktflächen ausgeübt werden, wenn die Kontaktflächen relativ zu einer Horizontalebene geneigt angeordnet sind.

Weitere vorteilhafte Ausführungsformen des Verfahrens ergeben sich aus den auf den Anspruch 1 rückbezogenen Unteransprüchen.

Nachfolgend werden bevorzugte Ausführungsformen der Erfindung unter Bezugnahme auf die beigefügten Zeichnungen näher erläutert.

### Es zeigen:

- **Fig. 1**: eine Kontakteinheit in einer perspektivischen Darstellung;
- **Fig. 2**: eine Prinzipdarstellung einer weiteren Kontakteinheit mit Kontaktschienen eines Fahrzeugs in einer Draufsicht;
- **Fig. 3**: die Kontakteinheit aus **Fig. 2** mit den Kontaktschienen in einer Vorderansicht;
- **Fig. 4**: die Kontakteinheit aus **Fig. 2** mit den Kontaktschienen in einer Seitenansicht.

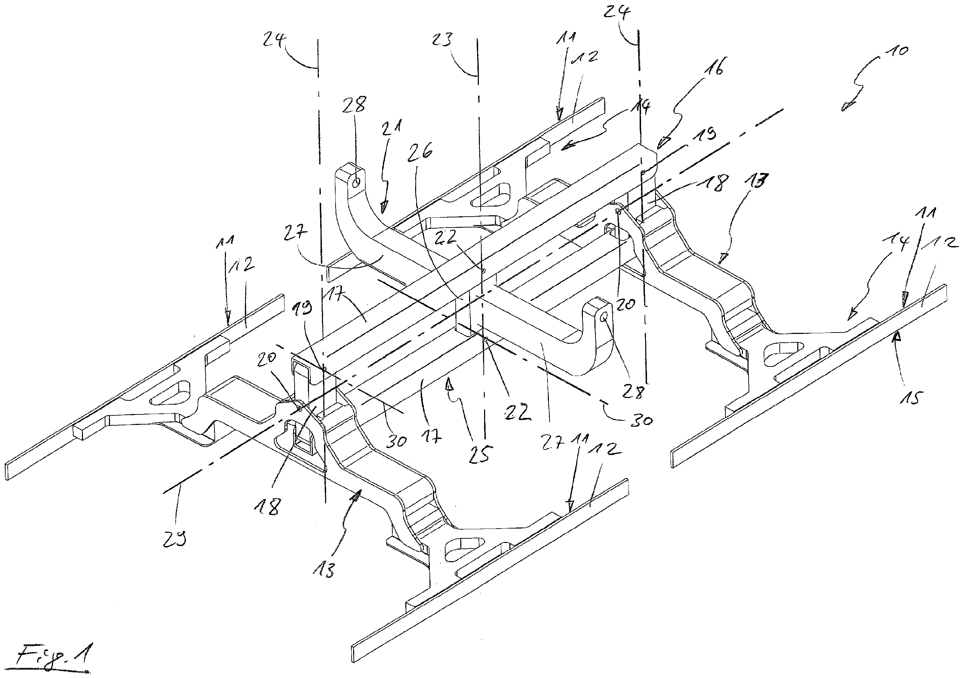

Die **Fig. 1** zeigt eine Kontakteinheit 10 für eine Ladestation eines elektrisch angetriebenen Fahrzeugs, wobei die Kontakteinheit 10 insgesamt vier Ladekontakte 11, die als Kontaktleisten 12 ausgebildet sind, aufweist. Weiter weist die Kontakteinheit 10 zwei Ladekontaktträger 13 auf, an deren distalen Enden 14 die Kontaktleisten 12 befestigt sind. So ist es möglich, mit einer Unterseite 15 der Kontaktleisten 12 hier nicht dargestellte Kontaktschienen auf einem Dach eines Fahrzeugs elektrisch zu kontaktieren.

Die im Wesentlichen bogenförmig oder U-förmig ausgebildeten Ladekontaktträger 13 sind mit einem Parallelgestänge 16 der Kontakteinheit 10, ausgebildet aus Verbindungsstangen 17 und vertikal angeordnete Trägerstangen 18, verbunden. Die Verbindungsstangen 17 sind mit den Trägerstangen 18 über Verbindungsgelenke 19 bewegbar verbunden, wobei die Ladekontaktträger 13 jeweils über ein Drehgelenk 20 mit der Trägerstange 18 bewegbar verbunden sind.

Ein Basisträger 21 der Kontakteinheit 10 ist über Trägergelenke 22 mit den Verbindungsstangen 17 bewegbar verbunden. Die Trägergelenke 22 sind in einer vertikalen Trägerebene 23 angeordnet, wobei die Verbindungsgelenke in jeweils vertikalen Bewegungsebenen 24 angeordnet sind. Die Bewegungsebenen 24 sind unabhängig von einer Lage bzw. einer Neigung eines von dem Parallelgestänge 16 ausgebildeten Parallelogramms 25 immer parallel bzw. koaxial zur Trägerebene 23 angeordnet.

Der Basisträger 21 weist einen Trägerstangenabschnitt 26 mit zwei auskragenden Armen 27 auf. An den Armen 27 ist jeweils eine Bohrung 28 zur Verbindung einer hier nicht dargestellten Gelenkarmvorrichtung der Kontakteinheit 10 ausgebildet. Insbesondere sind die Drehgelenke 20 relativ zu den Verbindungsgelenken 19 orthogonal angeordnet, so dass eine Längsachse 29 der Drehgelenke 20 quer bzw. in einem rechten Winkel zu Querachsen 30 der Verbindungsgelenke 19 verläuft.

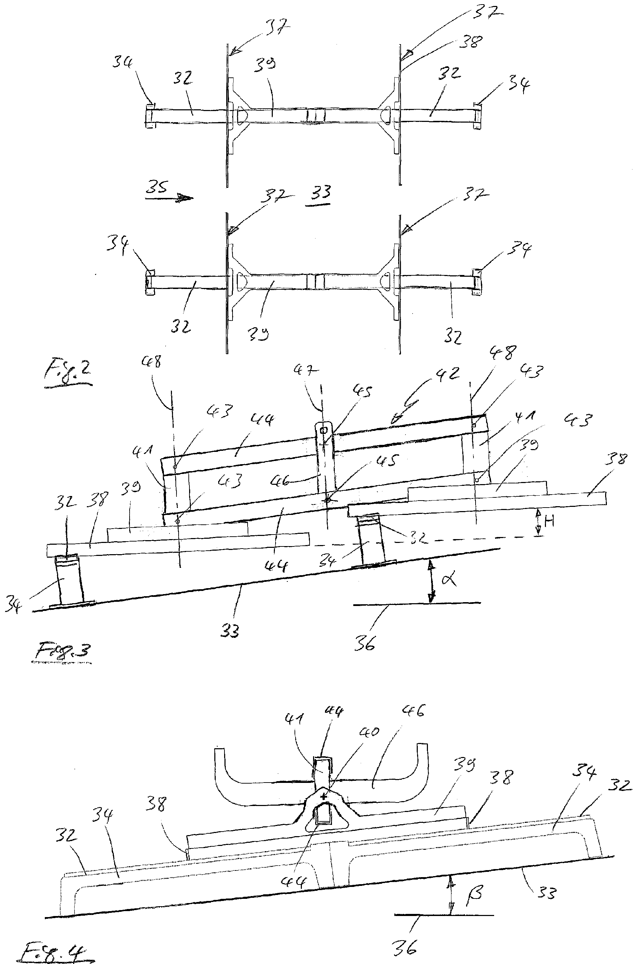

Eine Zusammenschau der **Fig. 2** bis **4** zeigt eine weitere Kontakteinheit 31 in einer schematischen Darstellung zusammen mit Kontaktschienen 32, die auf einem Dach 33 eines hier nicht näher dargestellten Fahrzeugs in einer mit einem Pfeil 35 gekennzeichneten Fahrtrichtung angeordnet sind. Die Kontaktschienen 32 sind jeweils auf bügelförmigen Haltern 34 parallel zu dem Dach 33 positioniert. Das Dach 33 wird relativ zu der mit dem Pfeil 35 gekennzeichneten Fahrtrichtung in einer Querrichtung des Fahrzeugs um einen Winkel α und zu einer Längsrichtung des Fahrzeugs um einen Winkel β relativ zu einer Horizontalebene 36 geneigt. Die Neigung beträgt hier nicht mehr als ± 5°.

Die Kontakteinheit 31 umfasst vier Ladekontakte 37, die als Kontaktleisten 38 ausgebildet und an Ladekontaktträgern 39 befestigt sind. Die Ladekontaktträger 39 sind wiederum über Drehgelenke 40 an Trägerstangen 41 eines Parallelgestänges 42 schwenkbar gehaltert. Die Trägerstangen 41 sind über Verbindungsgelenke 43 mit Verbindungsstangen 44 bewegbar verbunden. Die Verbindungsstangen 44 sind ihrerseits über Trägergelenke 45 mit einem im Wesentlichen starren Basisträger 46 bewegbar verbunden, derart, dass das Parallelgestänge 42 relativ zu einer vertikalen Trägerebene 47 gekippt bzw. geneigt werden kann. Die Trägerstangen 41 bewegen sich dann in Bewegungsebenen 48, die stets parallel und äquidistant zu der Trägerebene 47 sind. Dadurch wird es möglich, eine Höhendifferenz H der Kontaktleisten 38 in Querrichtung des Fahrzeugs bei gleich verteilter Kontaktkraft zwischen den Kontaktschienen 32 und den jeweiligen Kontaktleisten 38 auszubilden. Ebenso ist es möglich, die Ladekontaktträger 39 um das Drehgelenk 40, welches in Querrichtung des Fahrzeugs verläuft, quer zum Fahrzeug zu verschwenken, so dass sich auch hieraus eine gleichmäßige Kraftverteilung bei einem gleichzeitig sicheren elektrischen Kontakt zwischen Kontaktleisten 38 und Kontaktschienen 32 ergibt.

## Patentansprüche

1. Kontakteinheit (10, 31) für eine Ladestation eines elektrisch angetriebenen Fahrzeugs, insbesondere Elektrobus oder dergleichen, wobei die Kontakteinheit oberhalb eines Fahrzeugs anordenbar ausgebildet ist, wobei mittels der Kontakteinheit elektrische Ladekontakte (11, 37) der Kontakteinheit relativ zu Kontaktflächen (32) des Fahrzeugs bewegbar und mit diesen kontaktierbar sind, wobei die Kontakteinheit zumindest zwei Ladekontaktträger (13, 39) mit jeweils zumindest zwei daran angeordneten Ladekontakten aufweist, wobei die Ladekontaktträger über ein Parallelgestänge (16, 42) der Kontakteinheit mit zwei parallel angeordneten Verbindungsstangen (17, 44) und mit zwei parallel angeordneten Trägerstangen (18, 41) miteinander verbunden sind, wobei die Trägerstangen jeweils in einer von zwei parallelen Bewegungsebenen (24, 48) über voneinander beabstandete Verbindungsgelenke (19, 43) mit den Verbindungsstangen verbunden sind und mit den Verbindungsstangen ein Parallelogramm (25) ausbilden,
**dadurch gekennzeichnet,**
**dass** die Verbindungsstangen in einer parallel und zentrisch zu den Bewegungsebenen verlaufenden Trägerebene (23, 47) über zwei voneinander beabstandete Trägergelenke (22, 45) mit einem Basisträger (21, 46) der Kontakteinheit verbunden sind, wobei die Ladekontaktträger jeweils über ein Drehgelenk (20, 40) mit der Trägerstange verbunden sind, wobei die Drehgelenke relativ zu den Verbindungsgelenken orthogonal angeordnet sind, wobei die Ladekontaktträger jeweils die Ladekontakte relativ zu der Drehachse koaxial haltern.

2. Kontakteinheit nach Anspruch 1,
**dadurch gekennzeichnet,**
**dass** die Ladekontakte (11, 37) als Kontaktleisten (12, 38) ausgebildet sind, die jeweils an den Ladekontaktträgern (13, 39) relativ zueinander parallel angeordnet sind, wobei die Ladekontaktträger relativ zueinander parallel angeordnet sind.

3. Kontakteinheit nach Anspruch 1 oder 2,
**dadurch gekennzeichnet,**
**dass** die Kontaktleisten (12, 38) quer zur Fahrtrichtung (35) des Fahrzeugs panordenbar sind.

4. Kontakteinheit nach einem der vorangehenden Ansprüche,
**dadurch gekennzeichnet,**
**dass** die Kontakteinheit (10, 31) eine Gelenkarmvorrichtung und eine Antriebvorrichtung zum Antrieb der Gelenkarmvorrichtung aufweist.

5. Kontakteinheit nach einem der vorangehenden Ansprüche,
**dadurch gekennzeichnet,**
**dass** der Basisträger (21, 46) über zumindest ein Haltegelenk mit einer Gelenkarmvorrichtung der Kontakteinheit verbunden ist.

6. Kontakteinheit nach Anspruch 4 oder 5,
**dadurch gekennzeichnet,**
**dass** der Basisträger (21, 46) starr mit der Gelenkarmvorrichtung verbunden ist.

7. Kontakteinheit nach einem der vorangehenden Ansprüche,
**dadurch gekennzeichnet,**
**dass** die Kontakteinheit (10, 31) eine Ausrichteeinrichtung aufweist, mittels der in einer Einfahrposition der Kontakteinheit zur Verwahrung der Ladekontakte die Ladekontakte (11, 37) von einer Kontaktlage in eine horizontale Verwahrlage ausrichtbar sind.

8. Kontakteinheit nach Anspruch 7,
**dadurch gekennzeichnet,**
**dass** die Ausrichteeinrichtung als ein Anschlag für die Ladekontaktträger (13, 39) ausgebildet ist.

9. Kontakteinheit nach einem der vorangehenden Ansprüche,
**dadurch gekennzeichnet,**
**dass** die Kontakteinheit (10, 31) Federeinrichtungen aufweist, mittels der jeweils die Ladekontaktträger (13, 39) an dem Parallelgestänge (16, 42) und/oder das Parallelgestänge an dem Basisträger (21, 46) ausrichtbar sind.

10. Kontakteinheit nach einem der vorangehenden Ansprüche,
**dadurch gekennzeichnet,**
**dass** das Parallelgestänge (16, 42) und/oder die Ladekontaktträger (13, 39) an dem Parallelgestänge um bis zu ± 5° relativ zu einer Horizontalebene (36) neigbar ausgebildet sind.

11. Stationäre Ladestation für elektrisch angetriebene Fahrzeuge, insbesondere Elektrobusse oder dergleichen, mit einer Kontakteinheit (10, 31) nach einem der vorangehenden Ansprüche.

12. Verfahren zur Ausbildung einer elektrischen leitenden Verbindung zwischen einem Fahrzeug, insbesondere Elektrobus oder dergleichen, und einer Ladestation, wobei mittels einer Kontakteinheit (10, 31) der Ladestation nach einem der Ansprüche 1 bis 10 oberhalb eines Fahrzeugs elektrische Ladekontakte (11, 37) der Kontakteinheit relativ zu Kontaktflächen (32) des Fahrzeugs bewegt und mit diesen kontaktiert werden, wobei die Kontakteinheit zumindest zwei zueinander parallel angeordnete Ladekontaktträger (13, 39) mit jeweils zumindest zwei daran zueinander parallel angeordneten Ladekontakten aufweist, wobei die Ladekontakte von einer Einfahrposition zur Verwahrung der Ladekontakte in eine Kontaktposition zur Ausbildung von jeweils elektrischen Kontaktpaarungen zwischen den Ladekontakten und den Kontaktflächen bewegt werden,
**dadurch gekennzeichnet,**
**dass** in der Kontaktposition über die Kontakteinheit jeweils eine gleich große Kontaktkraft der Ladekontakte auf die Kontaktflächen ausgeübt wird.

13. Verfahren nach Anspruch 12,
**dadurch gekennzeichnet,**
**dass** die gleich große Kontaktkraft der Ladekontakte (11, 37) auf die Kontaktflächen (32) ausgeübt wird, wenn die Kontaktflächen relativ zu einer Horizontalebene (36) geneigt angeordnet sind.

## Claims

1. A contact unit (10, 31) for a charging station of an electrically driven vehicle, in particular an electric bus or the like, the contact unit being configured to be disposed above a vehicle, wherein electrical charging contacts (11, 37) of the contact unit are movable with respect to contact surfaces (32) of the vehicle and contact can be established between the charging contacts and the contact surfaces by means of the contact unit, the contact unit having at least two charging contact supports (13, 39) each of which has at least two charging contacts disposed thereon, the charging contact supports being connected to each other via a parallel linkage (16, 42) of the contact unit having two connecting rods (17, 44) disposed in parallel and having two support rods (18, 41) disposed in parallel, each support rod being connected to the connecting rods in one of two parallel movement planes (24, 48) via connecting hinges (19, 43) which are spaced apart from each other, and said support rods forming a parallelogram (25) with the connecting rods,
**characterized in that**
the connecting rods are connected to a base support (21, 46) of the contact unit via two support hinges (22, 45), which are spaced apart from each other, in a support plane (23, 47) extending in parallel and centrically to the movement planes, each charging contact support being connected to the support rod via a rotary hinge (20, 40), the rotary hinges being orthogonally disposed with respect to the connecting hinges, each charging contact support mounting the charging contacts coaxially with respect to the axis of rotation.

2. The contact unit according to claim 1,
**characterized in that**
the charging contacts (11, 37) are formed as contact strips (12, 38), which are each disposed in parallel with respect to each other on the charging contact supports (13, 39), the charging contact supports being disposed in parallel with respect to each other.

3. The contact unit according to claim 1 or 2,
**characterized in that**
the contact strips (12, 38) are disposable transversely to the driving direction (35) of the vehicle.

4. The contact unit according to any one of the preceding claims, **characterized in that**
the contact unit (10, 31) has an articulated arm device and a drive device for driving the articulated arm device.

5. The contact unit according to any one of the preceding claims,
**characterized in that**
the base support (21, 46) is connected to an articulated arm device of the contact unit via at least one retaining hinge.

6. The contact unit according to claim 4 or 5,
**characterized in that**
the base support (21, 46) is rigidly connected to the articulated arm device.

7. The contact unit according to any one of the preceding claims, **characterized in that**
the contact unit (10, 31) has an adjustment means by means of which, in a retracted position of the contact unit for storing the charging contacts, the charging contacts (11, 37) are adjustable from a contact position to a horizontal storage position.

8. The contact unit according to claim 7,
**characterized in that**
the adjustment means is formed as a stop for the charging contact supports (13, 39).

9. The contact unit according to any one of the preceding claims, **characterized in that**
the contact unit (10, 31) has spring means by means of which the charging contact supports (13, 39) are each adjustable on the parallel linkage (16, 42) and/or the parallel linkage is adjustable on the base support (21, 46).

10. The contact unit according to any one of the preceding claims,
**characterized in that**
the parallel linkage (16, 42) and/or the charging contact supports (13, 39) on the parallel linkage are configured to be inclined by up to ± 5° with respect to a horizontal plane (36).

11. A stationary charging station for electrically driven vehicles, in particular electric busses or the like, having a contact unit (10, 31) according to any one of the preceding claims.

12. A method for forming an electrically conductive connection between a vehicle, in particular an electric bus or the like, and a charging station, wherein electrical charging contacts (11, 37) of a contact unit (10, 31) are moved with respect to contact surfaces (32) of the vehicle and contact is established between the charging contacts and the contact surfaces by means of the contact unit (10, 31) of the charging station according to any one of claims 1 to 10 above the vehicle, the contact unit having at least two charging contact supports (13, 39) disposed parallel to each other and each having at least two charging contacts disposed thereon in parallel to each other, the charging contacts being moved from a retracted position for storing the charging contacts into a contact position for forming respective electrical contact pairs between the charging contacts and the contact surfaces,
**characterized in that**
in each case, an equal contact force of the charging contacts is exerted on the contact surfaces via the contact unit in the contact position.

13. The method according to claim 12,
**characterized in that**
the equal contact force of the charging contacts (11, 37) is exerted on the contact surfaces (32) when the contact surfaces are disposed in an inclined manner with respect to a horizontal plane (36).

## Revendications

1. Unité de contact (10, 31) pour une station de recharge d'un véhicule à propulsion électrique, notamment un bus électrique ou d'autres véhicules semblables, l'unité de contact étant formée de manière à être capable d'être disposée au-dessus d'un véhicule, des contacts de recharge (11, 37) électriques de l'unité de contact étant capables d'être mus par rapport à des surfaces de contact (32) du véhicule et étant capable de venir en contact avec celles-ci au moyen de l'unité de contact, l'unité de contact ayant au moins deux supports (13, 39) de contact de recharge dont chacun a au moins deux contacts de recharge disposés sur celui-ci, les supports de contact de recharge étant reliés l'un à l'autre via une tringlerie parallèle (16, 42) de l'unité de contact ayant deux tiges de liaison (17, 44) disposées parallèlement et ayant deux tiges de support (18, 41) disposées parallèlement, chaque tige de support étant reliée aux tiges de liaison via des articulations de liaison (19, 43), qui sont espacées l'une de l'autre, dans un plan de mouvement de deux plans de mouvement (24, 48) parallèles, et les tiges de support formant un parallélogramme (25) avec les tiges de liaison,
**caractérisée en ce que**
les tiges de liaison sont reliées à un support de base (21, 46) de l'unité de contact via deux articulations de support (22, 45), qui sont espacées l'une de l'autre, dans un plan de support (23, 47) s'étendant parallèlement et centralement par rapport aux plans de mouvement, chaque support de contact de recharge étant relié à la tige de support via une articulation rotative (20, 40), les articulations rotatives étant disposées orthogonalement par rapport aux articulations de liaison, chaque support de contact de recharge retenant les contacts de recharge coaxialement par rapport à l'axe de rotation.

2. Unité de contact selon la revendication 1,
**caractérisée en ce que**
les contacts de recharge (11, 37) sont réalisés comme bandes de contact (12, 38) dont chacune est disposée parallèlement l'une par rapport à l'autre sur les supports (13, 39) de contact de recharge, les supports de contact de recharge étant disposés parallèlement l'un par rapport à l'autre.

3. Unité de contact selon la revendication 1 ou 2,
**caractérisée en ce que**
les bandes de contact (12, 38) sont capables d'être disposées transversalement par rapport au sens de marche (35) du véhicule.

4. Unité de contact selon l'une quelconque des revendications précédentes,
**caractérisée en ce que**
l'unité de contact (10, 31) a un dispositif de bras articulé et un dispositif d'entraînement pour l'entraînement du dispositif de bras articulé.

5. Unité de contact selon l'une quelconque des revendications précédentes,
**caractérisée en ce que**
le support de base (21, 46) est relié à un dispositif de bras articulé de l'unité de contact via au moins une articulation de retenue.

6. Unité de contact selon la revendication 4 ou 5,
**caractérisée en ce que**
le support de base (21, 46) est relié rigidement au dispositif de bras articulé.

7. Unité de contact selon l'une quelconque des revendications précédentes,
**caractérisée en ce que**
l'unité de contact (10, 31) a un moyen d'ajustement au moyen duquel, dans une position de retirée de l'unité de contact pour ranger les contacts de recharge, les contacts de recharge (11, 37) sont ajustables d'une position de contact dans une position de rangement horizontale.

8. Unité de contact selon la revendication 7,
**caractérisée en ce que**
le moyen d'ajustement est réalisé comme butée pour les supports (13, 39) de contact de recharge.

9. Unité de contact selon l'une quelconque des revendications précédentes,
**caractérisée en ce que**
l'unité de contact (10, 31) a des moyens de ressort au moyens desquels chaque support (13, 39) de contact de recharge est ajustable sur la tringlerie parallèle et/ou la tringlerie parallèle est ajustable sur le support de base (21, 46).

10. Unité de contact selon l'une quelconque des revendications précédentes,
**caractérisée en ce que**
la tringlerie parallèle (16, 42) et/ou les supports (13, 39) de contact de recharge sur la tringlerie parallèle sont réalisés de manière à être inclinables de jusqu'à ± 5° par rapport à un plan horizontal (36).

11. Station de recharge fixe pour des véhicules à propulsion électrique, notamment des bus électriques ou d'autres véhicules semblables, ayant une unité de contact (10, 31) selon l'une quelconque des revendications précédentes.

12. Procédé pour former une connexion électriquement conductrice entre un véhicule, notamment un bus électrique ou d'autres véhicules semblables, et une station de recharge, des contacts de recharge (11, 37) électriques d'une unité de contact (10, 31) étant mus par rapport à des surfaces de contact (32) du véhicule et venant en contact avec celles-ci au moyen de l'unité de contact (10, 31) de la station de recharge selon l'une quelconque des revendications 1 à 10 au-dessus du véhicule, l'unité de contact ayant au moins deux supports (13, 39) de contact de recharge qui sont disposés parallèlement l'un par rapport à l'autre et dont chacun a au moins deux contacts de recharge qui sont disposés parallèlement l'un par rapport à l'autre sur ceux-ci, les contacts de recharge étant mus d'une position de retirée pour ranger les contacts de recharge dans une position de contact pour former toujours des paires de contact électriques entre les contacts de recharge et les surfaces de contact,
**caractérisé en ce que**
toujours une force de contact égale des contacts de recharge est exercée sur les surfaces de contact via l'unité de contact dans la position de contact.

13. Procédé selon la revendication 12,
**caractérisé en ce que**
la force de contact égale des contacts de recharge (11, 37) est exercée sur les surfaces de contact (32) lorsque les surfaces de contact sont disposées de manière inclinée par rapport à un plan horizontal (36).
